Europäisches Patentamt

European Patent Office

Office européen des brevets

(19)

(11) Publication number: 0 076 694

A2

# (12) EUROPEAN PATENT APPLICATION

(21) Application number: 82305291.5

(22) Date of filing: 05.10.82

(51) Int. Cl.³: **H 02 K 25/00**
H 02 K 29/00, H 02 K 7/118

(30) Priority: 06.10.81 JP 159709/81

(43) Date of publication of application:
13.04.83 Bulletin 83/15

(84) Designated Contracting States:
CH DE FR GB LI NL

(71) Applicant: Komatsu, Fumito
69-1632-12, Nomura Aza Ooaza Hirooka
Shiozirishi Naganoken(JP)

(84) Designated Contracting States:
CH DE FR LI NL

(71) Applicant: Watanuki, Takao
2-4-21 Miyoshicho
Nakanoshi Naganoken(JP)

(84) Designated Contracting States:
GB

(72) Inventor: Komatsu, Fumito
69-1632-12, Nomura Aza
Ooaza Hirooka Shiozirishi Naganoken(JP)

(74) Representative: Armitage, Ian Michael et al,
MEWBURN ELLIS & CO. 2/3 Cursitor Street
London EC4A 1BQ(GB)

(54) 4-Pole electric motor.

(57) A 4-pole armature (12) is accommodated within a 4-pole permanent-magnet ring 10, either the ring or armature serving as the rotor. The core (16) of the armature is cross-shaped, and two opposite members of the core have windings (18) applied to them with opposite winding directions. The cross-shaped core (16) is provided on at least one, and possibly both, opposite pair of core ends with back-up core elements (20) extending in the rotational direction of the armature or in the direction opposite to the rotational direction of the ring. A commutator (22, 24, 26) or the like device for converting armature polarity is provided which alternates the direction of electric current for the armature every 90° rotation of the rotor.

FIG.1

0076694

# 4-POLE ELECTRIC MOTOR

The present invention relates to 4-pole electric motors.

For motors which have a permanent-magnet ring surrounding an armature with electromagnetic poles having coil-wound cores, either the armature or the ring serving as the rotor with the other as the stator, turning off the current to the electromagnetic poles will stop the rotor at the position of lowest magnetic resistance resulting from the relative positional relationship between rotor and stator.

On restarting the motor with the rotor in such a position, there will be encountered the so-called start-up dead point where the ring poles and electromagnetic poles are in such a positional relationship that there are diametrical N-N and S-S orientations with respect to the axis of rotation, so that the motor is incapable of generating rotary force.

A means for avoiding the start-up dead point has been adopted in which the core itself has a deformed shape. However, this has disadvantages in that the projections, etc. interfere with the job of winding, and that the quantity of coil windings on the armature is reduced with lowered power efficiency.

According to the present invention there is provided a 4-pole motor characterised in that a 4-pole armature is provided within a 4-pole permanent-magnet ring, either the armature or ring serving as the rotor with the other as the stator, the electromagnetic-pole core of the armature is cross-shaped with the motor shaft at the centre, an opposite pair of the core members have windings wound in the opposite directions with respect to each other so as to provide the same polarity at their radially outer ends, back-up cores are provided on ends of at least one opposite pair of members of the core and extend in the direction of rotation of the armature in the case where the armature is the rotor or in the direction opposite to the direction of rotation of the ring in the case where the ring is the rotor, and that a device is provided with alternates the polarity of the electromagnetic poles every 90° rotation of the rotor.

In the accompanying drawings:

Fig. 1 shows a transverse cross-sectional view, partly broken away, of a DC motor of the present invention;

Fig. 2 shows a partly cut away side view of the embodiment of Fig. 1;

Fig. 3 shows partially cut-away views of armatures in which (a) relates to the present invention and (b) is for a 2-pole 3-slot structure;

Fig. 4 is a schematic representation of the armatures shown in Fig. 3; and

Fig. 5 shows a semidiagrammatic transverse sectional view of an AC motor according to the present invention.

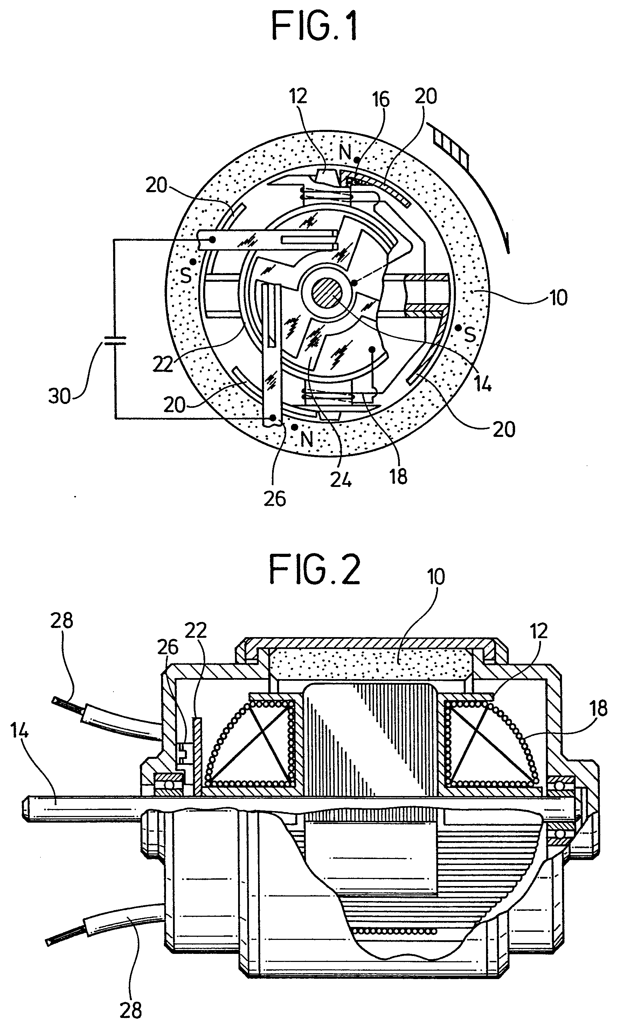

Referring to Fig. 1; a stator 10 is provided by a permanent-magnet ring having 4 poles equally magnetised, as indicated N, S, etc. An armature 12 rotates in the direction indicated by the arrow around a shaft 14. A cross-shaped armature core 16 has two opposite elements, representing one of its two magnetic paths, wound with an armature coil 18; the other two opposite elements, representing the other magnetic path, serving merely as magnetic poles. Armature coil 18 has windings applied on the opposite elements of core 16, shown vertical in the figure, in such a way that the two (upper and lower) elements on either side of the shaft 14 have windings in opposite directions to each other. Separately formed back-up cores 20 are fitted into the ends of all four elements of the core 16 and extend therefrom in an arc in the direction of rotation of the armature 12. A commutator 22 comprises a slider 24 and brushes 26. Slider 24 is provided on a disk, transverse to the shaft 14 and rotating with the armature so as to alternate the poles of the armature 12 between N and S every 90° of rotation. The brushes 26 are connected to a DC power supply by lead wires 28 shown in Fig. 2. A condenser 30 may be applied between brushes 26 to prevent sparks from generating noise.

With the above structure; while the armature 12 is rotating commutator 22 alternates the poles of armature 12 so as to energise the rotation of armature 12. When the power is turned off armature 12 stops with the elements of its core 16 at positions corresponding to the poles of stator 10. On restart the passage of electric current has an effect on the back-up cores 20 so as to shift the magnetic path in the rotational direction of armature 12, resulting in start-up with a displaced dead point.

The commutator as illustrated is composed of brushes and a rotary slider disk provided transverse to the shaft, but use may be made of the commutator in a sleeve along the shaft or any other common type. In the case of a contactless system utilising Hall elements, etc. for positional detection, the permanent-magnet ring may be used as the rotor with the armature as the stator. When the ring is used as the rotor, back-up cores 20 on core 16 of the armature 12, which is now the stator, are extended in the direction opposite to the direction of rotation of the ring.

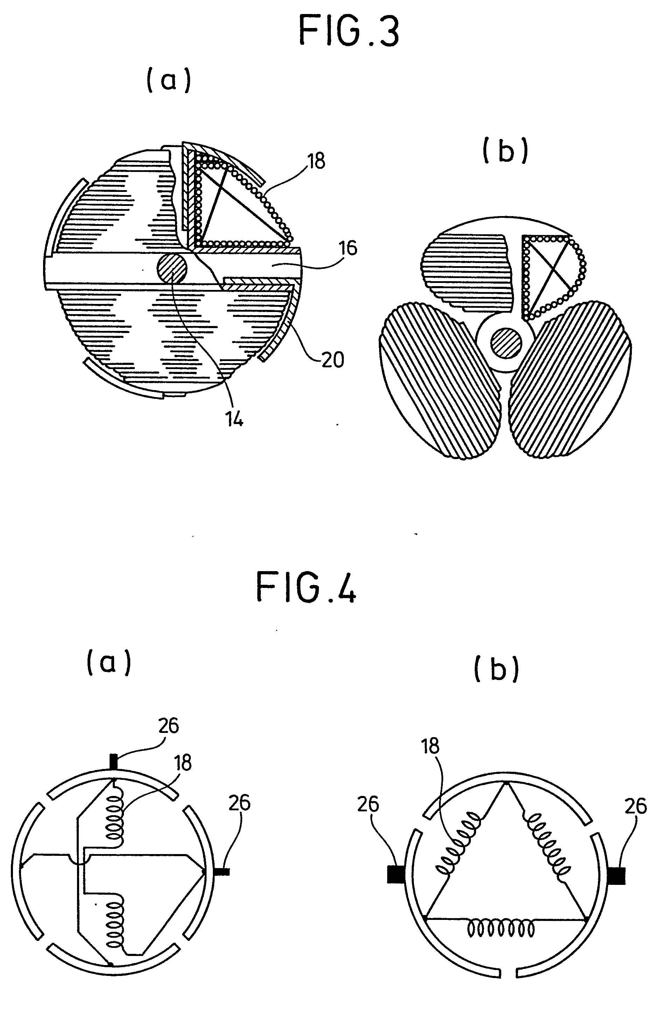

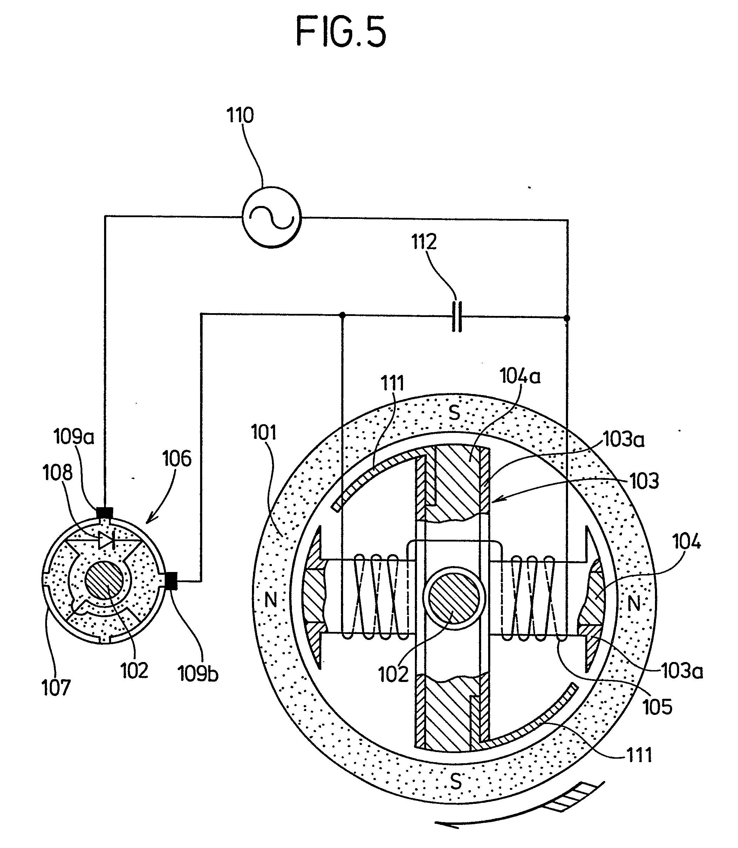

The present invention is to be applied specifically to 4-pole motors. The reason for this restriction is as follows. As seen from Fig. 3, the 4-pole armature (a) is close to a sphere or cylinder in shape as compared with the 2-pole 3-slot armature (b), and therefore may accommodate more coil windings. In addition, as seen from Fig. 4, the 4-pole armature (a) has its entire coil always in action, and therefore may give higher power efficiency than the 2-pole 3-slot armature (b) which has a combination of a circuit containing two coils and a circuit containing one coil.

The back-up cores 20 are attached to the core 16, at least those elements having the windings, after the armature coil has been wound on the core. Thus, the back-up cores will not disturb the process of coil winding.

Fig. 5 illustrates the principle of applying the present invention to construction of AC single-phase 4-pole motors.

A permanent-magnet rotor 101 with four interiorly-magnetised poles rotates on a shaft 102. A fixed armature 103 with the shaft 102 at its centre has a cross-shaped bobbin 103a as its frame. A field core 104 is formed from components which are applied to the cross-shaped bobbin 103a of the fixed armature 103. A field coil 105 is wound on two opposite elements of the bobbin 103a in directions opposite to each other with respect to shaft 102 at the centre so as to generate poles of the same polarity.

Of the field core elements 104 applied to the bobbin 103a, those field cores 104 with no field coils 105 applied are, as in Fig. 1, fitted at their ends with back-up cores 111, but extending in the direction opposite to the arrow-indicated direction of rotation as a means for eliminating or shifting the start-up dead point. Back-up cores 111 may, of course, be provided on each of the four ends of field cores 104, as in Fig. 1, or on the wound cores only.

A slider 106 rotates in union with the rotor and is provided with four slider pieces 107 on a sleeve about the shaft 102. These slider pieces are connected via a rectifier 108 so as to arrange conduction in the order + - + - in the circumferential direction. Brushes 109a and 109b are in sliding contact one with the (+) sliding piece 107 and the other with the (-) sliding piece 107. Brush 109a is connected to coil 105 via AC power supply 110 and brush 109b directly to coil 105. A condenser 112, which advances the phase of electric current to promote output, can be applied in parallel as in this example, or may be applied in series.

With this structure, power supply 110 passes current via the sliding piece 107 in the direction from brush 109a to 109b, causing rotor 101 to begin to rotate until there has been established another pole correspondence between fixed armature 103 and rotor 101, at which point the slider 106 has also rotated the same amount, reversing the direction of the current through sliding piece 107 with brushes 109a and 109b in contact, i.e. passing current from brush 109b to 109a. The reversal will change the poles of fixed armature 103, with resulting acceleration of the rotation of rotor 101.

The motor described above may be modified into a synchronous motor using the same AC power supply if for example a centrifugal control device is used so that, when the rotation of rotor 101 has become approximately synchronous with the AC cycle, slider 106 is allowed to shift in the direction of rotation with resultant short-circuiting between brushes 109a and 109b. It may also be modified into a synchronous motor capable of autostart if for example springs are used so that when rotor 101 is slowed down for stopping, slider 106 returns to its original position, thus resetting to a condition which enables start-up.

Field core 104a, which is vertical to field core 104 through rotary shaft 102, may be made available so as to be opposite in pole polarity to field core 104, in correspondence with the poles of rotor 101.

As described above, the present invention may provide various advantages. The use of back-up cores 20 eliminates the dead point against start-up, thereby facilitating start-up. The back-up cores 20 may be attached without disturbing the process of winding since they can be fitted after the field core has been wound, or provided on core elements not having windings. The field coil may be maximised in the quantity of windings within a given space. Since the armature is accommodated within the permanent-magnet ring with resulting suppression of leaking magnetic flux, such high efficiency is obtainable as to make it possible to reduce the size and thickness of the motor. AC motors of the present invention, when equipped with a device as described above, may be modified into synchronous motors capable of autostart.

CLAIMS:

1.      A 4-pole motor characterised in that a 4-pole armature (12) is provided within a 4-pole permanent-magnet ring (10), either the armature or ring serving as the rotor with the other as the stator, the electromagnetic-pole core (16) of the armature is cross-shaped with the motor shaft at the centre, an opposite pair of the core members have windings (18) wound in      opposite directions with respect to each other so as to provide the same polarity at their radially outer ends, back-up cores (20) are provided on ends of at least one opposite pair of members of the core (16) and extend in the direction of rotation of the armature in the case where the armature is the rotor or in the direction opposite to the direction of rotation of the ring in the case where the ring is the rotor, and that a device (20,22,24) is provided which alternates the polarity of the electromagnetic poles every 90° rotation of the rotor.

2.      A motor according to claim 1 wherein a conversion device utilising Hall elements for positional detection is used as the device for alternating the polarity of the electromagnetic poles.

3.      A motor according to claim 1 wherein a commutator is used as the device for alternating the polarity of the electromagnetic poles.

4.     A 4-pole DC motor according to claim 3 wherein the commutator is composed of a slider (24) and brushes (26), the slider being provided on a disk which is transverse to the motor axis and rotates with the rotor.

5.     A 4-pole AC motor according to claim 3 wherein the commutator comprises a slider (106) and brushes (109a,109b), the slider being divided into four slider pieces (107) provided on a sleeve around the rotor shaft (102), connection being made so that the set of slider pieces is made conductive in the circumferential direction in the order + - + - via a rectifier.

6.     A 4-pole motor according to any one of the preceding claims wherein a cross-shaped 4-pole armature (103) is fixed with pole correspondence within a rotary ring (101) in the form of a 4-pole permanent magnet, the rotor shaft (102) is inserted at the centre of the cross of the electromagnetic-pole core of the armature, and back-up cores (111) are provided at the ends of at least two opposite members of the cross-shaped core extending in the direction opposite to the direction of rotation of the ring.

7.     A 4-pole motor according to any one of claims 1 to 5 wherein a rotary cross-shaped 4-pole armature (12) is accommodated with pole correspondence within a fixed ring (10) in the form of a 4-pole permanent magnet, the rotor shaft (14) is provided at the centre of the cross of the electromagnetic-pole core of the armature, and back-up cores (20) are provided at the ends of at least two opposite members of the cross-shaped core extending in the direction of rotation of the armature.

8.    A 4-pole motor according to any one of the preceding claims wherein the back-up cores (20) are separately formed elements fitted to ends of the wound members of the cross-shaped core (16) after the windings (18) have been applied.

9.    A 4-pole motor according to any one of claims 1 to 7 wherein the back-up cores (111) are provided only on the ends of core elements (104) which do not carry windings (105).

# FIG.1

# FIG.2

# FIG.3

(a)

(b)

# FIG.4

(a)

(b)

FIG.5